# EUROPEAN PATENT SPECIFICATION

(11) **EP 2 607 643 B1**
(45) Date of publication and mention of the grant of the patent: **24.01.2018**
(21) Application number: 11840411.0
(22) Date of filing: 18.10.2011
(51) Int. Cl.: F01P 7/16, F02D 29/02, F16K 31/06, F01P 7/14

(54) **CONTROL VALVE**
STEUERVENTIL
SOUPAPE DE COMMANDE

(30) Priority: 12.11.2010 JP 2010253922
(43) Date of publication of application: 26.06.2013
(73) Proprietor: Aisin Seiki Kabushiki Kaisha, Aichi 448-8650 (JP)
(72) Inventor: MATSUSAKA Masanobu, Kariya-shi, Aichi 448-8650 (JP); SATO Tadayoshi, Kariya-shi, Aichi 448-8650 (JP)
(74) Representative: Kramer Barske Schmidtchen Patentanwälte PartG mbB
(86) International application number: PCT/JP2011/073910
(87) International publication number: WO 2012/063611

(56) References cited:
- DE-A1-102004 047 452
- JP-A- 2003 247 421
- JP-A- 2008 002 641
- US-A- 5 255 733
- US-A1- 2009 183 698

## Description

### TECHNICAL FIELD

The present invention relates to an engine cooling system including a control valve incorporated in a coolant circulatory passageway for circulating coolant between an engine and a heat exchanger via a pump and used for controlling the flow of the coolant.

### BACKGROUND ART

Conventionally, as an example of the control valve of this type, there is known a solenoid valve having a valve body which is urged to its closing direction by a spring. When no electric power is supplied to the coil of the solenoid, there is provided a valve closed state as the valve body is adhered to the valve seat by the urging force of the spring. When electric power is supplied to the coil, there is provided a valve opened state as a driving force to the valve opening direction provided by a magnetic force overwhelms the urging force of the spring resistant thereto (see e.g. paragraphs [0012], [0013], and Fig. 4 of JP 2849791 B2).

Further cooling systems and/or control valves are known from JP 2002-340219 A (see paragraphs [0024], [0025], Fig. 1), US 5,255,733, US 2009/0183698 A1 and DE 10 2004 047 452 A1, for example.

### SUMMARY OF INVENTION

### TECHNICAL PROBLEM

With the above-described conventional control valve, the solenoid is supposed to provide a drive force which can overwhelm the urging force of the spring. Hence, there is a problem that enlargement of the solenoid is inevitable.

Moreover, the valve opened state is realized with power supply to the coil. Normally, however, most of the in-use state is the valve opened state. Therefore, there is a need to keep the power supply during the in-use state, so that there is a problem of high electric power consumption.

As a solution to these problems, it is conceivable to arrange such that the valve body is adhered to the valve seat in association with power supply to the coil of the solenoid, thereby to realize the valve closed state. In this case, while the valve body is maintained under the valve opened state as receiving the force of coolant flowing in the coolant circulatory passageway, the valve closing operation relies on application of a combined force of the urging force of the spring and the magnetic force of the solenoid in the valve closing direction. Hence, while a stable valve closed state can be maintained, the spring and the solenoid can be formed compacter than the above-described convention, and moreover, the electric power consumption too can be reduced.

Notwithstanding the above, at the time of no power supply to the solenoid when no coolant is currently flowing in the coolant circulatory passageway, only the urging force of the spring is applied to the valve body. Hence; the pressing force is less than that available at the time of valve closing operation. Then, if a certain vibration is applied to the control valve in such situation as above, a sympathetic vibration tends to occur in the valve body, thus generating noise.

In view of the above, an object of the present invention is to provide an engine cooling system including a control valve that hardly generates noise from vibration applied thereto, while achieving compactization and power consumption saving of the valve.

### SOLUTION TO PROBLEM

This problem is solved by the subject-matter of independent claim 1. Further developments are given in the dependent claims.

With the first characterizing feature of the present invention, as described above, the valve body can be kept adhered to or seated on the valve seat when the ignition key of the engine is under its ON state, that is, when the engine is ready to be activated and the pump is stopped so that no coolant is currently flowing in the coolant circulatory passageway. With this arrangement, when the engine is activated thereafter or when the engine is not started yet but the vehicle mounting this engine starts running, thereby to generate vibration, it is possible to prevent this vibration from causing irregular movements of the valve body which in turn will cause repeated hitting thereof against the valve seat or the like.

Namely, the supply of electric power to the solenoid is started under a condition known to likely invite generation of noise from the valve body exposed to vibration, that is, under the stopped condition of the pump. Accordingly, the valve body can be adhered to the valve seat in a reliable manner, thus preventing sympathetic vibration thereof.

As a result, it is possible to prevent generation of noise from the valve body in association with application of a vibration thereto.

Moreover, it is also possible to achieve improvement of durability through effective prevention of frictional wear due to repeated hitting between the valve body and the valve seat.

Also, the electric power is consumed under the valve closed state realized with power supply to the solenoid, but no electric power is consumed otherwise, i.e. under the valve opened state. Hence, under the condition when coolant is circulating in the coolant circulatory passageway (valve opened state) which condition occupies most of the in-use condition of the control valve, no power is supplied to the solenoid. As a result, saving of power consumption is made possible.

Moreover, in the case of the conventional arrangement, when the urging force by the solenoid is applied against the urging force of the coil spring, the solenoid is to exert both the force for causing the valve body to adhere to the valve seat and the resistive force against the coil spring. Whereas, in the case of the arrangement of the present invention, no such large force is required for the solenoid, but it suffices for the solenoid to keep the valve body adhered to the valve seat. Hence, the solenoid can be formed compact, so that space saving is made possible.

Furthermore, the control valve further comprises an urging member configured to generate an urging force that allows the valve body to leave the valve seat when the pressure of the pump is applied to the valve body and that causes the valve body to be seated on the valve seat when the pressure of the pump is not applied to the valve body.

By this feature, it is possible to allow the circulation of coolant in the coolant passageway. Whereas, when no coolant is being circulated in the coolant passageway with stopping of the pump, the valve body can be seated on the valve seat.

Therefore, when the valve body is to be seated on the valve seat with supply of electric power to the solenoid, there can be readily formed a magnetic field in the valve body and the valve seat adhered to each other. As a result, the adhering operation of the valve body can be effected in a reliable manner and also there is no need to generate any excessive magnetic force at the time of start of adherence.

Further, by applying the combined force of the urging force of the solenoid and the urging force of the urging member to the valve body, the adherence between the valve body and the valve seat can be made even more stable and reliable.

As a result of all the above, it is possible to set the required ability of the solenoid small, so that compactization of the arrangement of the control valve and the power consumption saving of the control valve can be promoted.

According to a second characterizing feature of the present invention, the control valve is mounted on an engine of a hybrid vehicle, and the electric power is supplied to the solenoid in a motor-driven run mode of the vehicle with the engine being stopped.

A hybrid vehicle is capable of traveling with the motor alone, with keeping the engine stopped. In this case, the circulation of coolant in the coolant circulatory passageway too is stopped, so the valve body and the valve seat are placed under a mutual condition of being merely in contact with each other in the absence of any fluid circulation. Accordingly, the adherence between the valve body and the valve seat tends to be weak. Therefore, if vibration is applied thereto, this can cause irregular movements of valve body inside the control valve, which will result in repeated hitting between this valve body and the valve seat, thus generating noise.

Then, with the second characterizing feature of the present invention, the valve body can be seated on the valve seat in a reliable manner with power supply to the solenoid. Thus, generation of noise from the control valve in the hybrid vehicle can be avoided and the above-described inconvenience can be avoided.

According to a third characterizing feature of the present invention, the control valve is mounted on an engine having the pump which allows electrical or mechanical change of coolant communication/non-communication state, and
the electric power is supplied to the solenoid when the temperature of the engine is equal to or lower than a first predetermined temperature and the engine is being operated with the pump being stopped.

In the case of the above-described arrangement wherein the engine includes a pump that allows change of coolant communication/ non-communication state, if it is desired to carry out warm-up of the engine speedily because the temperature of the engine is currently low, it is possible to control the pump to the non-communication state for stopping coolant circulation. When the vehicle starts traveling thereafter, there is the possibility of hitting between the valve body and the valve seat. With the control valve having the above-described arrangement, no such inconvenience as above will not occur since the valve body is kept adhered to the valve seat.

With the third characterizing feature of the present invention, generation of noise from the control valve of an engine-driven vehicle can be avoided with supply of electric power to the solenoid.

That is, when the engine is being operated with keeping the pump stopped, the adherence of the valve body to the valve seat tends to be instable; and with power supply to the solenoid under such condition, the valve body is urged to the valve closing direction, so that more stable adhered condition between the valve body and the valve seat can be maintained.

As a result, generation of noise from the valve body associated with vibration can be prevented.

According to a fourth characterizing feature of the present invention, the coolant circulatory passageway for circulation inside the engine is branched into a cylinder head coolant circulatory passageway for circulating the coolant inside a cylinder head and a cylinder block coolant circulatory passageway for circulating the coolant inside a cylinder block;
the control valve is incorporated in the cylinder block coolant circulatory passage and includes a pump which allows electrical or mechanical change of coolant communication/non-communication state, and
the electric power is supplied to the solenoid when the temperature of the engine is equal to or lower than a second predetermined temperature and the engine is being operated with the pump too being operated.

In the case of the above-described arrangement wherein the engine includes a pump that allows change of coolant communication/ non-communication state, if it is desired to carry out warm-up of the engine speedily because the temperature of the engine is currently low, it is possible to control the pump to the non-communication state for stopping coolant circulation. When the vehicle starts running thereafter, there is the possibility of hitting between the valve body and the valve seat. With the control valve having the above-described arrangement, no such inconvenience as above will not occur since the valve body is kept adhered to the valve seat.

With the fourth characterizing feature of the present invention, in the cylinder block portion, communication of coolant to the cylinder block coolant circulatory passageway can be blocked with power supply to the solenoid. Hence, it is possible to increase the temperature of the cylinder block portion speedily. With this, the temperature of engine oil can be increased speedily, thereby to reduce friction loss. As a result, the effect of warming-up acceleration can be obtained sufficiently. Further, coolant can be communicated to the cylinder head portion by activating the pump with keeping the power supply to the solenoid. With this, even if the engine experiences a high load condition during its warm-up operation, sharp rise in the temperature of the cylinder head portion can be prevented, so that occurrence of heat shock to the cylinder head portion can be avoided. Moreover, even if the coolant is supplied to the cylinder head coolant passageway, the inconvenience of remaining bubbles can be avoided, so that occurrence of heat spot in the cylinder head portion can be prevented.

According to another aspect, a control valve comprises:
a main body having a coolant channel and a valve seat;
a valve body movable between a position away from the valve seat and a position in contact with the valve seat; and
a solenoid configured to cause the valve body to be adhered to the valve seat with a magnetic force generated in response to supply of electric power thereto;
wherein the main body, the valve body and the solenoid are incorporated in a coolant circulatory passageway for circulating coolant between an engine mounted on a vehicle and a heat exchanger via a pump; and
supply of electric power to the solenoid is controlled by a control circuit such that the control circuit starts the supply of electric power to the solenoid when the circuit determines occurrence of vibration in the vehicle.

With this feature, as described above, when the control circuit determines occurrence of vibration in the vehicle, the control circuit can start the supply of electric power to the solenoid. Thereafter, when the engine is activated or when the engine is not yet started but the vehicle mounting this engine starts running and vibration occurs, the above arrangement can prevent irregular movements of the valve body affected by this vibration and resultant repeated hitting between the valve body and the valve seat.

Namely, since the power supply to the solenoid is started when the control circuit determines occurrence of vibration in the vehicle, the valve body can be adhered to the valve seat in a more reliable manner, thereby to prevent sympathetic vibration thereof.

As a result, it is possible to prevent generation of noise from the valve body in association with application of a vibration thereto.

Further, it is also possible to achieve improvement of durability through effective prevention of frictional wear due to repeated hitting between the valve body and the valve seat.

Also, the electric power is consumed under the valve closed state realized with power supply to the solenoid, but no electric power is consumed otherwise, i.e. under the valve opened state. Hence, under the condition when coolant is circulating in the coolant circulatory passageway (valve opened state) which condition occupies most of the in-use condition of the control valve, no power is supplied to the solenoid. As a result, saving of power consumption is made possible.

Moreover, in the case of the conventional arrangement, when the urging force by the solenoid is applied against the coil spring, the solenoid is to exert both the force for causing the valve body to adhere to the valve seat and the resistive force against the coil spring. Whereas, in the case of the arrangement of the present invention, no such large force is required for the solenoid, but it suffices for the solenoid to only keep the valve body seated on the valve seat. Hence, the solenoid can be formed compact, so that space saving is made possible.

### BRIEF DESCRIPTION OF DRAWINGS

[Fig.1] is a diagram of an engine cooling system,
[Fig. 2] is a vertical section showing a control valve,
[Fig. 3] is an explanatory view illustrating a switching condition of a switch,
[Fig. 4] is an explanatory view illustrating a switching condition of a switch, and
[Fig. 5] is an explanatory view illustrating a switching condition of a switch.

### DESCRIPTION OF EMBODIMENTS

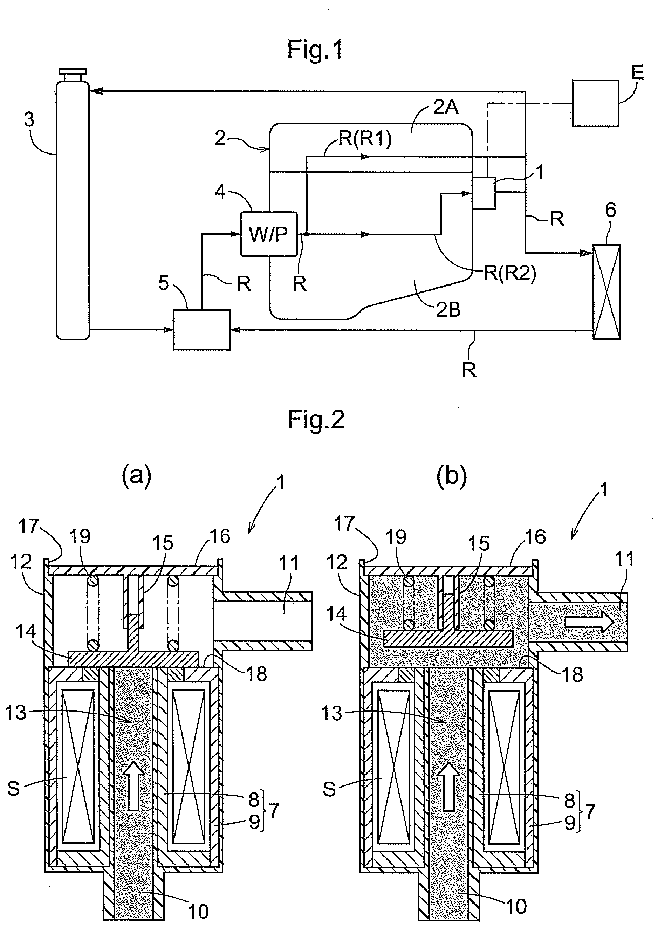

Next, a control valve of the present invention will be described with reference to the accompanying drawings. Fig. 1 is a diagram showing an engine cooling system using the fluid control valve according to the present invention. An engine 2 has two routes of outflow passageway for cooling water (coolant), one being connected to a radiator 3, the other being connected to a heater core 6 (an example of a "heat exchanger" in the invention).

The outflow channel from the radiator 3 is connected to a thermostat valve 5. The outflow channel from the thermostat valve 5 is connected to a water pump 4 (corresponding to a "pump"). Further, the outflow channel from the water pump 4 is connected to an inflow channel to the engine 2. With these flow channels, cooling water heated by the engine 2 is introduced to the radiator 3 and cooled therein, and this cooled water is caused to flow through the thermostat valve 5 and the water pump 4 back to the engine 2.

On the other hand, the flow passageway from the engine 2 to the heater core 6 incorporates a fluid control valve 1 (corresponding to the "control valve"). The outflow channel from the core heater 6 is connected to another inflow channel to the thermostat valve 5. With these flow channels, the water heated by the engine 2 is introduced to the heater core 6 via the fluid control valve 1, so that the heater core 6 heats air present inside the vehicle, and the resultant cooled water is then caused to flow back to the engine 2 via the thermostat valve 5 and the water pump 4. This circulatory passageway extending in the fluid control valve 1 will be referred to as a "coolant circulatory passageway R" hereinafter.

The fluid control valve 1 is incorporated in the coolant circulatory passageway R as described above and used for controlling outflow of the cooling water to the heater core 6.

The fluid control valve 1 is closed in the absence of hydraulic pressure developed in the cooling water and is opened in response to hydraulic pressure developed in the cooling water. The fluid control valve 1 is kept under the closed state with supply of electric power to the fluid control valve 1.

Fig. 2 (a) is a section view showing a closing operation of the fluid control valve 1 and Fig. 2 (b) is a section view showing an opening operation of the fluid control valve 1.

A solenoid S which can be electrically connected to an external unillustrated drive circuit via an unillustrated connector is comprised of a bobbin 7 (core) formed like a double-walled cylinder made of a magnetic material such as iron and a length of copper wire on the coil held within the bobbin 7.

The bobbin 7 includes an inner radius portion 8 and an outer portion 9. The copper wire is wound around the inner radius portion 8.

Further, the bobbin 7 is disposed inside a housing 12 including an inlet port 10 and an outlet port 11. On the inner side of the inner radius portion 8 of the bobbin 7, there is formed a coolant passageway 13 constituting a portion of the coolant circulatory passageway R and communicated to the inlet port 10.

A valve body 14 formed of a magnetic material such as iron is slidably supported by a cover 16 via a bearing portion 15, and the cover 16 is disposed in such a manner as to close a housing opening 17 formed on the side opposite the inlet port 10. A valve seat 18 which comes into contact with the valve body 14 is formed on a flanged face of the bobbin 7 on the side opposite the inlet port 10. Between the valve body 14 and the cover 16, there is provided a coil spring (corresponding to an "urging means") 19 for urging the valve body 14 toward the valve seat 18.

The valve body 14 moves away from the valve seat 18 by the urging force of the coil spring 19 with the circulation, if any, of cooling water and moves into contact with the valve seat 18 for blocking the communication of cooling water when the circulation of cooling water is stopped.

The solenoid S is capable of bringing the valve body 14 toward the valve seat 18 and adhering the former to the latter, in response to supply of electric power to its copper wire.

This fluid control valve 1 can be mounted on a hybrid vehicle, an engine-driven vehicle, for instance, and ON and OFF state of the power supply to the solenoid S is controlled by a central control unit (corresponding to a "control circuit") E mounted on the vehicle, based on data relating to ON/OFF state of the ignition key, ON/OFF state of a driving motor, ON/OFF state of the engine and ON/OFF state of the water pump 4.

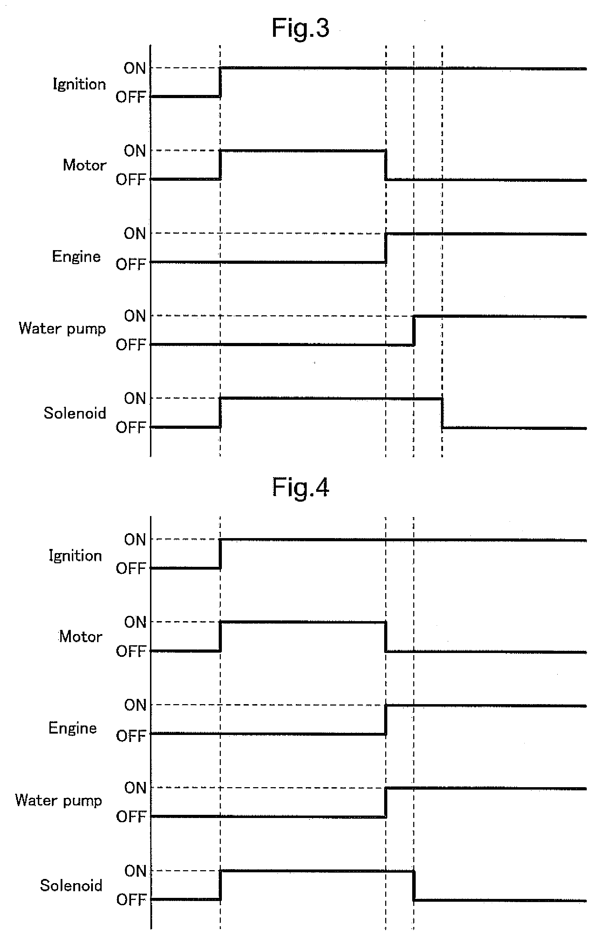

Next, some examples of control scheme for the solenoid S will be explained by way of Cases 1-3, with reference to Figs. 3-5.

### [Case 1] (see Fig. 3)

The vehicle on which the inventive valve is mounted is a hybrid vehicle and as the water pump 4, there is employed one that allows electrical (or mechanical) ON/OFF switching.

Further, inside the engine 2, the passageway is branched into a coolant passageway for circulating coolant in a cylinder head portion 2A and a coolant passageway for circulating the coolant in a cylinder block portion 2B (see Fig. 1).

In response to an ON operation of the ignition key, a motor-driven run is effected. In the course of this, the water pump 4 is controlled to stay OFF and electric power is supplied to the solenoid S (this will be described as ON).

In this case, even if vibration generated in association with the vehicle run is applied to the control valve, as the valve body 14 is kept adhered to the valve seat 18, noise generation due to sympathetic vibration with the above vibration is prevented.

Also, when the vehicle run is switched from the motor-driven run to the engine-driven run, immediately after this switchover, the water pump 4 may sometimes be controlled to stay OFF until the cooling water is heated. In this case, the solenoid S will be continuously controlled to ON state during the period until the water pump 4 is controlled to ON state. In this regard, the following should be noted. Even if the water pump 4 is controlled to the ON state, if the solenoid S is continuously controlled to stay ON, the adhered state between the valve body 14 and the valve seat 18 too will be continued, so that the condition of no cooling water circulating in the coolant circulatory passageway R will be continued.

Thereafter, when the water pump 4 is turned ON to circulate the cooling water in the coolant circulatory passageway R, the solenoid S will be controlled to the no-power supplied state (this will be described as OFF state), so that the valve body 14 will be moved away from the valve seat 18 by the hydraulic pressure of cooling water and the fluid control valve 1 is rendered into the opened state.

For example, this Case 1 can be implemented in the start-up by the motor of the hybrid vehicle, as well as its motor-driven run and its engine-driven run.

Further, Case 1 can be used also e.g. in the case of a run on restart after waiting for a traffic light or when the run mode is switched to the engine-driven run in order to keep the engine at an appropriate temperature after reduction thereof in the course of a motor-driven run on a long downslope.

### [Case 2] (see Fig. 4)

The vehicle on which the inventive valve is mounted is a hybrid vehicle and as the water pump 4, there is employed one that is operated in correspondence with start of the engine and that per se does not allow its switching independently.

Further, inside the engine 2, unlike Case 1, between the water pump 4 and the fluid control valve 1, there is provided only one route of coolant passageway (no shown).

In response to an ON operation of the ignition switch, a motor-driven run is effected. In the course of this, the water pump 4 is maintained under the OFF state and the solenoid S is set under the ON state.

In this case, even if vibration generated in association with the vehicle run is applied to the control valve, the valve body 14 is kept adhered to the valve seat 18. Thus, noise generation due to sympathetic vibration with the vibration is prevented.

Further, when the vehicle run is switched from the motor-driven run to the engine-driven run, the water pump 4 too is switched in correspondence with the engine. Immediately after this switchover, the water pump 4 may sometimes be controlled to stay OFF until the cooling water present inside the cylinder block portion 2B is heated. In this case, the solenoid S will be continuously controlled to ON state during the period until the water pump 4 is controlled to ON state. In this regard, the following should be noted. Even if the water pump 4 is controlled to the ON state, if the solenoid S is continuously controlled to stay ON, the adhered state between the valve body 14 and the valve seat 18 also will be continued, so that the condition of no cooling water circulating in the coolant circulatory passageway R will be maintained.

Thereafter, when the water pump 4 is turned ON to circulate the cooling water in the coolant circulatory passageway R, the solenoid S will be controlled to the OFF state, so that the valve body 14 will be moved away from the valve seat 18 by the hydraulic pressure of cooling water and the fluid control valve 1 is rendered into the opened state.

This Case 2, like Case 1, can be implemented in the start-up by the motor of the hybrid vehicle, as well as its motor-driven run and its engine-driven run.

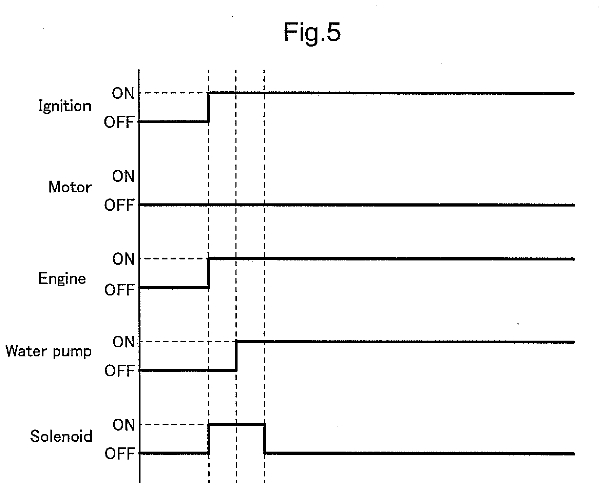

### [Case 3] (see Fig. 5)

The vehicle on which the inventive valve is mounted is an engine-driven vehicle and as the water pump 4, there is employed one that allows electrical (or mechanical) ON/OFF switching.

Further, inside the engine 2, the coolant circulatory passageway R is branched into a cylinder head coolant circulatory passageway R1 for circulating coolant in a cylinder head portion 2A and a cylinder block coolant circulatory passageway R2 for circulating the coolant in a cylinder block portion 2B (see Fig. 1).

In response to an ON operation of the ignition key, the engine is started. In the course of this, the water pump 4 is controlled to stay OFF and the solenoid S is controlled to the ON state.

In this case, even if vibration generated in association with vehicle run (or engine driving vibration) is applied to the control valve, as the valve body 14 is kept adhered to the valve seat 18, noise generation due to sympathetic vibration with the above vibration is prevented.

As for the engine, significant heat loss occurs from the wall face of the cylinder head portion 2A and the wall face of the cylinder block portion 2B which wall faces are positioned around the combustion chamber of the engine. Then, if the temperature of the cylinder head portion 2A or the cylinder block portion 2B is low, the temperature of an amount of engine oil present adjacent the wall face of the cylinder block portion 2B is lowered, thus leading to increase in the viscosity of the oil. As a result, there occurs inconvenience of increased friction between the cylinder block portion 2B and the piston ring or the piston. For this reason, it is desirable to warm-up the engine speedily.

In view of the above, in the cylinder block portion 2B, the solenoid S is controlled to the ON state in response to start of the engine thereby to cause the valve body 14 and the valve seat 18 to be adhered to each other for blocking introduction of cooling water into the cylinder block coolant circulatory passageway R2, whereby the temperature of the cylinder block portion 2B is increased speedily. With this, the temperature of the engine oil is increased speedily so as to reduce the friction loss. As a result, sufficient warm-up acceleration effect can be achieved.

On the other hand, the wall portion of the cylinder head portion 2A is exposed to combustion gas having a high temperature, so that the temperature of the cylinder head portion 2A can easily become higher as compared with the cylinder block portion 2B, thus tending to cause a heat shock to the cylinder head portion 2A. Also, the cylinder head portion 2A is disposed upwardly of the cylinder block portion 2B and in addition, the cylinder head coolant circulatory passageway R1 extends in the cylinder head portion 2A in a complicated form, so that bubbles tend to remain more easily in the cooling water present inside the cylinder head portion 2A than in the cooling water present inside the cylinder block portion 2B, thus tending to form a heat spot at the cylinder head portion 2A. In view of this, by controlling the water pump 4 too to the ON state while keeping the solenoid S under the ON state, cooling water can be caused to circulate in the cylinder head portion 2A with keeping no-communication of cooling water to the cylinder block coolant circulatory passageway R2. With this arrangement, even if the engine experiences a high load state during warm-up, sharp rise in the temperature of the cylinder head portion 2A is effectively prevented, so that occurrence of heat shock to the cylinder head portion 2A can be restricted. Moreover, even if cooling water is supplied to the cylinder head coolant circulatory passageway R1, the problem of bubbles remaining therein can be avoided, so that formation of a heat spot at the cylinder head portion 2A can be prevented.

Thereafter, upon completion of warm-up of the cylinder block portion 2B, the solenoid S will be controlled to the OFF state, whereby the valve body 14 is moved away from the valve seat 18 by the hydraulic pressure of cooling water and the fluid control valve 1 is rendered into the opened state and cooling water begins to circulate in the cylinder block coolant circulatory passageway R2.

This Case 3 can be applied to e.g. warm-up operation of the engine-driven vehicle.

With the fluid control valve according to the instant embodiment, even if vibration is applied to the valve during its closed state, sympathetic vibration of the valve body and noise generation resultant therefrom can be prevented. Moreover, with this prevention of vibration, frictional wear of the valve too can be prevented.

Further, since the valve body 14 is urged by the coil spring 19, the conductivity to the valve body is increased. So, a magnetic field can be readily formed in response to supply of electric power to the solenoid S. Accordingly, there is no need to generate any excessive magnetic flux at the initial stage of realizing the adherence. As a result, the capacity required of the solenoid can be set small, thereby to contribute to compactization of the control valve and power consumption saving of the control valve.

### [Other Embodiments]

Next, other embodiments will be described respectively.

<1> The urging means is not limited to the coil spring explained in the foregoing embodiment, but can be a pneumatic spring, or means utilizing magnetism, etc.
   Furthermore, without providing any special arrangement as the urging means, the valve body 14 per se may be configured to provide an urging function by means of e.g. the gravity affecting its mass.
<2> The control valve of the present invention is not limited to the one having the shape described in the foregoing embodiment. The shapes and layout of its various components can vary as needed or appropriate.

For instance, the solenoid S may be disposed on the side of the valve body 14, rather than on the side of the valve seat 18.

Incidentally, although reference sings are provided in the foregoing description in order to facilitate reference to the accompanying drawings, it should be noted that the provision thereof is not to limit the scope of the present invention to the arrangements illustrated in these drawings. Further, it is understood as a matter of course that the present invention may be embodied with various modifications thereof as long as such modifications do not cause any deviation from the essential concept of the present invention.

### INDUSTRIAL APPLICABILITY

The present invention may be applied to a fluid control valve for controlling the flow of fluid such as cooling water and oil in a vehicle.

### REFERENCE SIGNS LIST

- 1: fluid control valve (corresponding to a "control valve")
- 2: engine
- 4: water pump
- 6: heater core (an example of a heat exchanger)
- 13: coolant passageway
- 14: valve body
- 18: valve seat
- 19: coil spring (corresponding to an "urging means")
- E: central control unit (corresponding to a "control circuit")
- R: coolant circulatory passageway
- S: solenoid

## Claims

1. An engine cooling system including a control valve (1) incorporated in a coolant circulatory passageway (R) for circulating coolant between an engine (2) and a heat exchanger (6) via a pump (4), the control valve (1) comprising:
a main body having a coolant channel (13) and a valve seat (18), the coolant channel (13) constituting a portion of the coolant circulatory passageway (R);
a valve body (14) movable between a position away from the valve seat (18) and a position in contact with the valve seat (18);
a solenoid (S) configured to cause the valve body (14) to be adhered to the valve seat (18) with a magnetic force generated in response to supply of electric power thereto; and
an urging member (19) configured to generate an urging force that allows the valve body (14) to leave the valve seat (18) when the pressure of the pump (4) is applied to the valve body (14) and that causes the valve body (14) to be seated on the valve seat (18) when the pressure of the pump (4) is not applied to the valve body (14),
wherein the power supply to the solenoid (S) is started when an ignition key of the engine (2) is under its ON state and the pump (4) is stopped.

2. An engine cooling system according to claim 1, wherein the control valve (1) is mounted on the engine (2) of a hybrid vehicle, and the electric power is supplied to the solenoid (S) in a motor-driven run mode of the vehicle with the engine (2) being stopped.

3. An engine cooling system according to claim 1, wherein the control valve (1) is mounted on an engine (2) having the pump (4) which allows electrical or mechanical change of coolant communication/non-communication state, and
the electric power is supplied to the solenoid (S) when the temperature of the engine (2) is equal to or lower than a first predetermined temperature and the engine (2) is being operated with the pump (4) being stopped.

4. An engine cooling system according to claim 1 or 3, wherein the coolant circulatory passageway (R) for circulation inside the engine (2) is branched into a cylinder head coolant circulatory passageway (R1) for circulating the coolant inside a cylinder head and a cylinder block coolant circulatory passageway (R2) for circulating the coolant inside a cylinder block;
the control valve (1) is incorporated in the cylinder block coolant circulatory passageway (R2) and includes the pump (4) which allows electrical or mechanical change of coolant communication/non-communication state, and
the electric power is supplied to the solenoid (S) when the temperature of the engine (2) is equal to or lower than a second predetermined temperature and the engine (2) is being operated with the pump (4) too being operated.

## Patentansprüche

1. Brennkraftmaschinenkühlsystem, das ein Steuerventil (1) aufweist, das in einen Kühlmittelumlaufdurchgang (R) zum Umwälzen eines Kühlmittels zwischen einer Brennkraftmaschine (2) und einem Wärmetauscher (6) über eine Pumpe (4) eingebaut ist, wobei das Steuerventil (1) aufweist:
einen Hauptkörper mit einem Kühlmittelkanal (13) und einem Ventilsitz (18), wobei der Kühlmittelkanal (13) einen Bereich des Kühlmittelumlaufdurchgangs (R) bildet;
einen Ventilkörper (14), der zwischen einer Position weg von dem Ventilsitz (18) und einer Position in Berührung mit dem Ventilsitz (18) beweglich ist;
einen Elektromagnet (S), der derart ausgebildet ist, dass er den Ventilkörper (14) veranlasst, an dem Ventilsitz (18) mit einer Magnetkraft anzuhaften, die in Erwiderung auf eine Zufuhr elektrischer Energie dorthin erzeugt wird; und
ein Drängelement (19), das zum Erzeugen einer Drängkraft ausgebildet ist, die es dem Ventilkörper (14) ermöglicht, den Ventilsitz (18) zu verlassen, wenn der Druck der Pumpe (4) auf den Ventilkörper (14) ausgeübt wird, und die den Ventilköper (14) veranlasst, auf dem Ventilsitz (18) aufzusitzen, wenn der Druck der Pumpe (4) nicht auf den Ventilkörper (14) ausgeübt wird,
bei dem die Energiezufuhr zu dem Elektromagnet (S) beginnt, wenn ein Zündschlüssel der Brennkraftmaschine (2) sich in seinem AN-Zustand befindet und die Pumpe (4) angehalten wird.

2. Brennkraftmaschinenkühlsystem nach Anspruch 1, bei dem das Steuerventil (1) an der Brennkraftmaschine (2) eines Hybridfahrzeugs montiert ist, und die elektrische Energie dem Elektromagneten (S) in einem Motor-angetriebenen Fahrbetrieb des Fahrzeugs zugeführt wird, bei dem die Brennkraftmaschine (2) angehalten ist.

3. Brennkraftmaschinenkühlsystem nach Anspruch 1, bei dem das Steuerventil (1) an einer Brennkraftmaschine (2) montiert ist, die die Pumpe (4) aufweist, die einen elektrischen oder mechanischen Wechsel eines Kühlmittelverbindungs-/-Nicht-Verbindungszustands ermöglicht, und
die elektrische Energie dem Elektromagneten (S) zugeführt wird, wenn die Temperatur der Brennkraftmaschine (2) gleich oder geringer als eine erste vorgegebene Temperatur ist und die Brennkraftmaschine (2) betätigt wird, während die Pumpe (4) angehalten ist.

4. Brennkraftmaschinenkühlsystem nach Anspruch 1 oder 3, bei dem der Kühlmittelumlaufdurchgang (R) zum Umwälzen im Inneren der Brennkraftmaschine (2) sich in einen Zylinderkopf-Kühlmittelumlauf-durchgang (R1) zum Umwälzen des Kühlmittels im Inneren eines Zylinderkopfs und einen Zylinderblock-Kühlmittelumlaufdurchgang (R2) zum Umwälzen des Kühlmittels im Inneren eines Zylinderblocks verzweigt;
das Steuerventil (1) in dem Zylinderblock-Kühlmittelumlaufdurchgang (R2) eingebaut ist und die Pumpe (4) aufweist, die einen elektrischen oder mechanischen Wechsel eines Kühlmittelverbindungs-/-Nicht-Verbindungszustands ermöglicht, und
die elektrische Energie dem Elektromagneten (S) zugeführt wird, wenn die Temperatur der Brennkraftmaschine (2) gleich oder geringer als eine zweite vorgegebene Temperatur ist, und die Brennkraftmaschine (2) betrieben wird, während die Pumpe (4) ebenfalls betrieben wird.

## Revendications

1. Système de refroidissement de moteur incluant une soupape de commande (1) incorporée dans un passage circulatoire de réfrigérant (R) pour faire circuler le réfrigérant entre un moteur (2) et un échangeur de chaleur (6) par le biais d'une pompe (4), la soupape de commande (1) comprenant :
un corps principal présentant un canal de réfrigérant (13) et un siège de soupape (18), le canal de réfrigérant (13) constituant une partie du passage circulatoire de réfrigérant (R) ;
un corps de soupape (14) mobile entre une position loin du siège de soupape (18) et une position en contact avec le siège de soupape (18) ;
un solénoïde (S) configuré pour amener le corps de soupape (14) à être collé au siège de soupape (18) avec une force magnétique générée en réponse à l'alimentation de la puissance électrique à celui-ci ; et
un élément de poussée (19) configuré pour générer une force de poussée qui permet au corps de soupape (14) de quitter le siège de soupape (8) lorsque la pression de la pompe (4) est appliquée sur le corps de soupape (14) et qui amène le corps de soupape (14) à être logé sur le siège de soupape (18) lorsque la pression de la pompe (4) n'est pas appliquée au corps de soupape (14),
dans lequel l'alimentation de puissance au solénoïde (S) est démarrée lorsqu'une clé de contact du moteur (2) est dans son état MARCHE et la pompe (4) est arrêtée.

2. Système de refroidissement de moteur selon la revendication 1, dans lequel la soupape de commande (1) est montée sur le moteur (2) d'un véhicule hybride, et l'alimentation électrique est fournie au solénoïde (S) dans un mode de roulement entraîné par moteur du véhicule, le moteur (2) étant arrêté.

3. Système de refroidissement de moteur selon la revendication 1, dans lequel la soupape de commande (1) est montée sur un moteur (2) présentant la pompe (4) qui permet le changement électrique ou mécanique d'état de communication / non communication de réfrigérant, et
la puissance électrique est fournie au solénoïde (S) lorsque la température du moteur (2) est égale ou inférieure à une première température prédéterminée et le moteur (2) est en fonctionnement, la pompe (4) étant arrêtée.

4. Système de refroidissement de moteur selon la revendication 1 ou 3, dans lequel le passage circulatoire de réfrigérant (R) pour la circulation dans le moteur (2) est ramifié en un passage circulatoire de réfrigérant de tête de cylindre (R1) pour faire circuler le réfrigérant dans une tête de cylindre et un passage circulatoire de réfrigérant de bloc de cylindre (R2) pour faire circuler le réfrigérant dans un bloc de cylindre ;
la soupape de commande (1) est incorporée dans le passage circulatoire de réfrigérant de bloc de cylindre (R2) et inclut la pompe (4) qui permet le changement électrique ou mécanique d'état de communication / non communication de réfrigérant, et
la puissance électrique est fournie au solénoïde (S) lorsque la température du moteur (2) est égale ou inférieure à une seconde température prédéterminée et le moteur (2) est en fonctionnement, la pompe (4) étant aussi actionnée.
